# EUROPÄISCHE PATENTANMELDUNG

(11) **EP 1 338 770 A2**
(43) Veröffentlichungstag der Anmeldung: **27.08.2003**
(21) Anmeldenummer: 03001924.4
(22) Anmeldetag: 30.01.2003
(51) Int. Cl.: F01N 3/20, F01N 3/035, F01N 3/28

(54) **Abgasreinigungsanlage für eine Brennkraftmaschine**

(30) Priorität: 25.02.2002 DE 10207986
(71) Anmelder: DaimlerChrysler AG, 70567 Stuttgart (DE)
(72) Erfinder: Duvinage, Frank, Dr., 73230 Kirchhheim (DE); Goerigk, Christian, 71397 Leutenbach (DE); Liebscher, Thomas, 70736 Fellbach (DE); Mainka, Dieter, 70771 LE.-Echterdingen (DE); Müller-Lunz, Siegfried, 73614 Schorndorf (DE); Nolte, Arno, 70188 Stuttgart (DE); Paule, Markus, 71404 Korb (DE)

(57) **Zusammenfassung**

Die Erfindung betrifft eine Abgasreinigungsanlage für eine Brennkraftmaschine, die in Strömungsrichtung des Abgases gesehen einen Partikelfilter (26), Mittel zum Bereitstellen eines Reduktionsmittels (34) im Abgasstrom, einen Katalysator zur Reduktion (14) von im Abgas enthaltenem Stickoxid sowie einen nachgeschalteten Oxidationskatalysator (38) aufweist.

Erfindungsgemäß ist in Strömungsrichtung des Abgases gesehen vor dem Partikelfilter (26) ein vorgeschalteter Oxidationskatalysator (16) angeordnet.

Verwendung zur Abgasreinigung von mager betriebenen Fahrzeugverbrennungsmotoren.

## Beschreibung

Die Erfindung betrifft eine Abgasreinigungsanlage für eine Brennkraftmaschine, die in Strömungsrichtung des Abgases gesehen einen Partikelfilter, Mittel zum Bereitstellen eines Reduktionsmittels im Abgasstrom, einen Katalysator zur Reduktion von im Abgas enthaltenem Stickoxid sowie einen nachgeschalteten Oxidationskatalysator aufweist.

Aus der deutschen Offenlegungsschrift DE 40 32 085 A1 ist eine Katalysatoranordnung zur Reduktion von Stickoxiden bekannt. Bei der dort beschriebenen Katalysatoranordnung sind innerhalb eines gemeinsamen Gehäuses in Strömungsrichtung gesehen hintereinander ein Rußpartikelfilter, ein Temperaturspitzenpuffer, eine Eindüsvorrichtung für Ammoniak, ein Strömungsmischer, ein erstes Denox-Katalysatorbett, ein zweites Denox-Katalysatorbett und ein Oxidations-Katalysatorbett angeordnet. Das erste Denox-Katalysatorbett weist gegenüber dem zweiten Denox-Katalysatorbett ein Wirkungsoptimum bei höheren Temperaturen auf.

Aus der europäischen Offenlegungsschrift EP 0 806 553 A2 ist ein Verfahren zur Abgasreinigung bei Dieselmotoren bekannt, bei dem zur Rußbefeuchtung in einem Rußfilter sowie zur HC-Anreicherung im Abgas Brennstoff in die Abgasführung gegeben wird. Stromaufwärts des Rußfilters kann ein Oxidationskatalysator, stromabwärts des Rußfilters ein Oxidationskatalysator oder ein SCR-Katalysator (Selective Catalytic Reduction) mit integriertem Oxidationskatalysator vorgesehen sein. Zur HC-Anreicherung des Rußes im Rußfilter wird in die Abgasführung ein flüssiger Brennstoff zugegeben.

Aus der europäischen Offenlegungsschrift EP 0 896 831 A1 ist eine Abgasreinigungsanlage zur katalytischen Stickoxid-Reduktion bekannt, bei der Harnstoff als Reduktionsmittel in den Abgasweg eingebracht wird. Der Harnstoff wird stromaufwärts eines Kombinationsbauteils aus Verdampfer, Gasmischer und Hydrolysekatalysator eingebracht. Stromaufwärts des Kombinationsbauteils und der Eindüsvorrichtung kann ein Oxidationskatalysator vorgesehen sein. Stromabwärts des Kombinationsbauteils kann ein Reduktionskatalysator sowie in Strömungsrichtung auf diesen folgend ein Ammoniak(NH₃)-Sperrkatalysator vorgesehen sein.

Mit der Erfindung soll ein Abgasreinigungssystem mit einer Anordnung von Komponenten geschaffen werden, die bei deutlicher Verringerung der Emissionen und geringem Kraftstoffmehrverbrauch eine hohe Betriebssicherheit auch über längere Betriebsdauern ermöglicht.

Erfindungsgemäß ist hierzu eine Abgasreinigungsanlage für eine Brennkraftmaschine, die in Strömungsrichtung des Abgases gesehen einen Partikelfilter, Mittel zum Bereitstellen eines Reduktionsmittels im Abgasstrom, einen Katalysator zur Reduktion von im Abgas enthaltenem Stickoxid sowie einen nachgeschalteten Oxidationskatalysator aufweist, bei der in Strömungsrichtung des Abgases gesehen vor dem Partikelfilter ein vorgeschalteter Oxidationskatalysator angeordnet ist.

Das der Erfindung zugrundeliegende Problem wird auch durch eine gattungsgemäße Abgasreinigungsanlage gelöst, bei der der Partikelfilter mit einer Oxidationskatalysatorbeschichtung versehen ist.

Mittels des vor dem Partikelfilter angeordneten vorgeschalteten Oxidationskatalysators oder des Partikelfilters mit Oxidationskatalysatorbeschichtung ist es möglich, eine Oxidation von Kohlenwasserstoffen und Kohlenmonoxiden zu erreichen. Darüber hinaus kann mittels des vorgeschalteten Oxidationskatalysators, gegebenenfalls in Verbindung mit einer Kraftstoffnacheinspritzung im Brennraum, die Abgastemperatur angehoben werden, um den Partikelfilter zu regenerieren, die Temperatur des Katalysators zur Reduktion von Stickoxid in den katalytisch aktiven Bereich anzuheben und Versottungseffekte, entsprechend einer Belegung der Katalysatoroberfläche mit schwerflüchtigen Kohlenwasserstoffen sowie Ruß, zu vermeiden bzw. rückgängig zu machen. Auf diese Weise können die Emissionen verringert werden, die Abgastemperatur kann in einem Bereich gehalten werden, in dem der Katalysator zur Reduktion von Stickoxid arbeitet und die Funktionsfähigkeit und Betriebssicherheit des Systems kann über eine lange Betriebsdauer aufrechterhalten werden.

Durch die gewählte Kombination und Anordnung der Komponenten wird eine Abgasreinigungsanlage geschaffen, die ein wirksames Gesamtsystem darstellt, dessen Komponenten aufeinander abgestimmt sind. So wird eine Minderung der Partikelemission durch den Partikelfilter erreicht. Durch die Mittel zum Bereitstellen eines Reduktionsmittels im Abgasstrom, beispielsweise eine Eindüsvorrichtung für Ammoniak sowie den in Strömungsrichtung folgenden Katalysator zur Reduktion von im Abgas enthaltenen Stickoxid, der vorteilhafterweise als sogenannter SCR-Katalysator (Selective Catalytic Reduction) ausgebildet ist, können zum einen Stickoxide zu Stickstoff reduziert werden und zum anderen Kohlenwasserstoffe und Kohlenmonoxide oxidiert werden. Darüber hinaus können Folgeprodukte, welche bei der Partikelfilterregeneration entstehen, oxidiert werden. Weiterhin können Rest-Kohlenwasserstoffe und Kohlenmonoxide, die durch eventuelle Heizmaßnahmen am vorgeschalteten Oxidationskatalysator entstehen können, oxidiert werden. In dem nachgeschalteten Oxidationskatalysator kann überschüssiges Reduktionsmittel, beispielsweise Ammoniak, das bei nicht optimalem Betrieb der Mittel zum Bereitstellen des Reduktionsmittels oder des SCR-Katalysators freigesetzt und im Abgasstrom vorhanden ist, oxidiert werden, so dass es nicht in die Umgebung emittiert wird. Die Mittel zum Bereitstellen eines Reduktionsmittels im Abgasstrom sorgen für eine geregelte Bereitstellung des benötigten Reduktionsmittels in Abhängigkeit der Betriebsweise der Brennkraftmaschine. Als Reduktionsmittel können beispielsweise Ammoniak (NH₃), Harnstoff in fester Form oder in wässriger Lösung, Ammoniumcarbamat und andere Substanzen verwendet werden, die eine Abspaltung von Ammoniak ermöglichen.

In Weiterbildung der Erfindung sind Mittel zum Einbringen von Wasserstoff oder Kraftstoff in den Abgasstrom stromaufwärts des Partikelfilters und/oder stromaufwärts des vorgeschalteten Oxidationskatalysators und/oder des Katalysators zur Reduktion von im Abgas enthaltenen Stickstoff vorgesehen.

Mittels einer Wasserstoff- oder Kraftstoffdosierung in den Abgasstrom kann die Anspringtemperatur der HC- und CO-Oxidation am vorgeschalteten oder am nachgeschalteten Oxidationskatalysator abgesenkt werden. Hierbei ist eine Dosierung vor dem jeweiligen Oxidationskatalysator vorteilhaft. Darüber hinaus kann eine Wasserstoff- oder Kraftstoffdosierung in den Abgasstrom eine Absenkung der Anspringtemperatur der NOₓ-Reduktion im SCR-Katalysator bewirken. Hierbei ist eine Dosierung vor dem SCR-Katalysator vorteilhaft. Auch eine Unterstützung einer Regeneration des Partikelfilters kann mittels einer Wasserstoff- oder Kraftstoffdosierung vor dem Partikelfilter erreicht werden.

In Weiterbildung der Erfindung weisen die Mittel zum Bereitstellen eines Reduktionsmittels im Abgasstrom eine Vorrichtung zum Einbringen von Harnstoff in den Abgasstrom sowie einen im Abgasstrom angeordneten Hydrolysekatalysator auf. Mittels eines Hydrolysekatalysators kann die Hydrolyse von Harnstoff unterstützt werden.

In Weiterbildung der Erfindung ist stromaufwärts des Katalysators zur Reduktion von im Abgas enthaltenem Stickstoff eine Gasmischvorrichtung im Abgasstrom vorgesehen.

Mittels eines Gasmischers kann eine homogene Verteilung des Reduktionsmittels im Abgas erreicht werden.

In Weiterbildung der Erfindung ist die Gasmischvorrichtung wenigstens teilweise mit einem als Hydrolysekatalysator wirkenden Material beschichtet. Auf diese Weise kann ein zusätzlicher Hydrolysekatalysator eingespart werden ohne auf dessen Funktion der Unterstützung der Hydrolyse von Harnstoff verzichten zu müssen.

In Weiterbildung der Erfindung ist die Gasmischvorrichtung wenigstens teilweise mit einem als Katalysator zur Reduktion von im Abgas enthaltenem Stickoxid wirkenden Material beschichtet.

Durch diese Maßnahmen kann die Reduktion von Stickoxid zu Stickstoff unterstützt werden. Beispielsweise kann die Gasmischvorrichtung mit einem SCR-Katalysator beschichtet werden.

In Weiterbildung der Erfindung sind wenigstens ein Temperatursensor, wenigstens ein Drucksensor im Bereich des Partikelfilters, wenigstens ein Stickoxid-Sensor sowie wenigstens ein Ammoniak-Sensor im Abgasstrom vorgesehen und eine zentrale Steuereinheit zur Ansteuerung der Mittel zum Bereitstellen eines Reduktionsmittels sowie der Mittel zum Einbringen von Wasserstoff oder Kraftstoff in Abhängigkeit von Signalen der Sensoren ist vorgesehen.

Durch Bereitstellen von Sensoren sowie einer die Sensorsignale verarbeitenden zentralen Steuereinheit kann eine intelligente, in Abhängigkeit der Sensorsignale geregelte Betriebsart des Abgasreinigungssystems sichergestellt werden. Dadurch können auch bei geringen Abgastemperaturen HC-, CO-, NOₓ- und Partikelemissionen wirkungsvoll verringert werden. Beispielsweise kann durch die von der zentralen Steuereinheit veranlasste Zugabe von Abwasserstoff oder Kraftstoff in den Abgasstrom die Katalysatortemperatur so angehoben werden, dass hohe NOₓ-Umsatzraten sowie ein sicherer Betrieb des Partikelfilters verwirklicht werden können.

Weiterhin kann mittels der zentralen Steuereinheit auch eine Einspritzanlage der Brennkraftmaschine angesteuert werden, so dass beispielsweise eine Abgastemperatur mittels einer Nacheinspritzung von Kraftstoff angehoben werden kann.

Weitere Merkmale und Vorteile der Erfindung ergeben sich aus den Ansprüchen und der nachfolgenden Beschreibung mehrerer bevorzugter Ausführungsformen der Erfindung im Zusammenhang mit den Zeichnungen. In den Zeichnungen zeigen:
- Fig. 1: eine schematische Darstellung einer ersten Ausführungsform der Erfindung,
- Fig. 2: eine schematische Darstellung einer zweiten Ausführungsform der Erfindung,
- Fig. 3: eine schematische Darstellung einer dritten Ausführungsform der Erfindung und
- Fig. 4: eine schematische Darstellung einer vierten Ausführungsform der Erfindung.

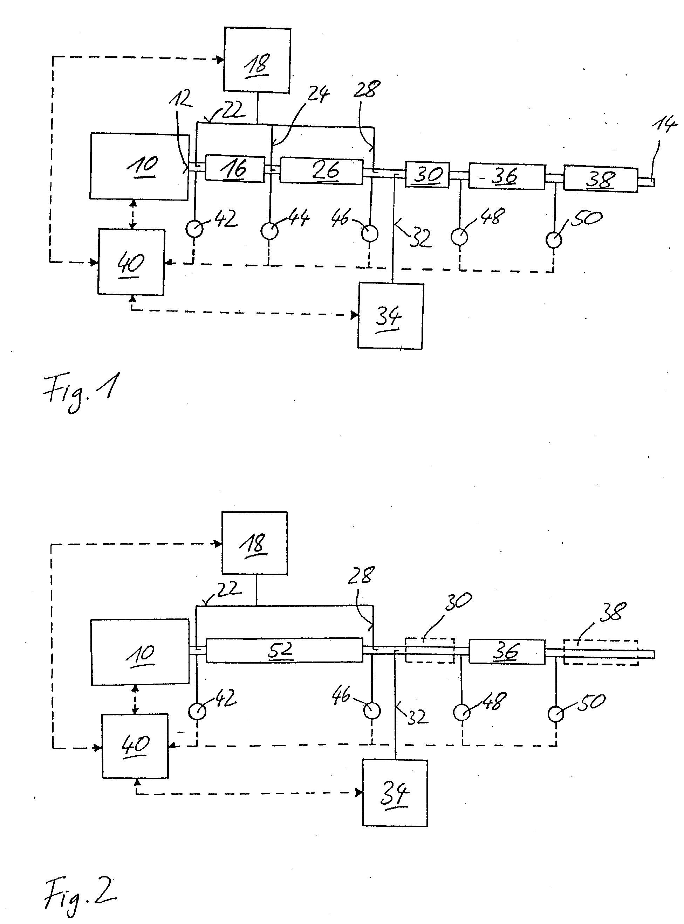

Die schematische Darstellung der Fig. 1 zeigt einen Dieselmotor 10, der mit einer Abgasreinigungsanlage verbunden ist. Die Abgase treten über einen Auslass 12 in die Abgasreinigungsanlage ein und aus dieser in die Umgebung an einem mit 14 bezeichneten Auslass aus. Bei der in der Fig. 1 dargestellten ersten Ausführungsform der Erfindung gelangt das Abgas vom Dieselmotor 10 zunächst zu einem Oxidationskatalysator 16. In diesem vorgeschalteten Oxidationskatalysator werden Kohlenwasserstoffe HC sowie Kohlenmonoxide CO oxidiert. Im Zusammenhang mit einer Kraftstoffnacheinspritzung über die Einspritzanlage des Dieselmotors 10 kann mittels des Oxidationskatalysators 16 die Abgastemperatur angehoben werden. Eine solche Anhebung der Abgastemperatur kann auch über eine separate Wasserstoffdosierung in den Abgasstrom erfolgen. Zur Wasserstoffdosierung in den Abgasstrom ist eine Dosiervorrichtung für Wasserstoff 18 vorgesehen, die mit einer Leitung 22 verbunden ist, die in den Abgasstrang stromaufwärts des vorgeschalteten Oxidationskatalysators 16 mündet. Stromabwärts des vorgeschalteten Oxidationskatalysators 16 mündet eine weitere Leitung 24 in den Abgasstrang, die ebenfalls von der Dosiervorrichtung 18 für Wasserstoff ausgeht.

Auf den Oxidationskatalysator 16 folgt ein Partikelfilter 26, der eine Minderung der Partikelemission bewirkt. Stromabwärts des Partikelfilters 26 mündet eine weitere Leitung 28 in den Abgasstrang, die ebenfalls mit der Dosiereinrichtung 18 für Wasserstoff verbunden ist.

Nach dem Partikelfilter 26 gelangt das Abgas in einen Hydrolysekatalysator 30, wobei stromaufwärts des Hydrolysekatalysators 30 eine Leitung 32 in den Abgasstrang mündet, die von einer Dosiervorrichtung für Reduktionsmittel 34 ausgeht. In der dargestellten Ausführungsform der Erfindung wird mittels der Dosiervorrichtung 34 und der Leitung 32 Harnstoff in den Abgasstrom eingebracht. Durch den Hydrolysekatalysator wird die Hydrolyse von Harnstoff unterstützt. Darüber hinaus übernimmt der Hydrolysekatalysator 30 auch eine Gasmischfunktion, um eine homogene Verteilung des Reduktionsmittels im Abgas zu erreichen.

Stromabwärts des Hydrolysekatalysators 30 ist ein SCR-Katalysator (Selective Catalytic Reduction) in den Abgasstrang eingeschaltet. Mittels des SCR-Katalysators kann eine Reduktion von Stickoxiden NOₓ zu Stickstoff N₂ erfolgen. Dies erfolgt unter Heranziehung des Reduktionsmittels aus der Dosiervorrichtung 34. Weiterhin können im SCR-Katalysator 36 Kohlenwasserstoffe HC und Kohlenmonoxide CO oxidiert werden. Ebenfalls können Folgeprodukte oxidiert werden, welche bei einer Regeneration des Partikelfilters 26 entstehen. Darüber hinaus können Kohlenwasserstoffe HC und Kohlenmonoxide CO oxidiert werden, die durch gegebenenfalls vorgesehene Heizvorgänge am Oxidationskatalysator 16 entstehen können.

Stromabwärts des SCR-Katalysators 36 ist ein nachgeschalteter Oxidationskatalysator 38 angeordnet. Dieser nachgeschaltete Oxidationskatalysator 38 dient als Sperrkatalysator für Ammoniak NH₃. Mittels des nachgeschalteten Oxidationskatalysators 38 wird somit verhindert, dass Ammoniak bei nicht optimalem Betrieb der Dosiervorrichtung 34, des Hydrolysekatalysators 30 oder des SCR-Katalysators 36 in die Umgebung austritt.

Die Einspritzanlage des Dieselmotors 10, die Dosiervorrichtung 18 für Wasserstoff sowie die Dosiervorrichtung 34 für Harnstoff können von einer zentralen Steuereinheit 40 angesteuert werden. Ein Datenaustausch zwischen dem Dieselmotor 10, der Dosiervorrichtung 18 sowie der Dosiervorrichtung 34 ist durch jeweils einen strichlierten Doppelpfeil zwischen diesen Komponenten angedeutet. Die für die Steuerung bzw. Regelung der Einspritzanlage des Dieselmotors 10, der Dosiervorrichtung 18 sowie der Dosiervorrichtung 34 erforderlichen Messwerte aus dem Abgasstrang erhält die zentrale Steuereinheit 40 von Sensoren 42, 44, 46, 48 und 50, die lediglich schematisch angedeutet sind. Die Übergabe von Messwerten von den Sensoren 42, 44, 46, 48 und 50 an die zentrale Steuereinheit 40 ist durch strichlierte Pfeile angedeutet.

Im einzelnen wird mittels des Sensors 42 eine erste Temperatur des Abgases stromaufwärts des vorgeschalteten Oxidationskatalysators 16 erfasst. Mittels des Sensors 44 ist verdeutlicht, dass zwischen dem vorgeschalteten Oxidationskatalysator 16 und dem Partikelfilter 26 eine zweite Temperatur des Abgases sowie ein Abgasdruck vor dem Partikelfilter 26 erfasst werden. An der Messstelle 46, die zwischen dem Partikelfilter 26 und dem Hydrolysekatalysator 30 am Abgasstrang angeordnet ist, werden ein dritter Temperaturwert des Abgases, ein zweiter Druck des Abgasstroms sowie ein erster Stickoxidwert erfasst.

Stromabwärts des Hydrolysekatalysators 30 und stromaufwärts des SCR-Katalysators 36 wird eine vierte Temperatur im Abgasstrom erfasst.

Schließlich wird über eine Messstelle 50 stromabwärts des SCR-Katalysators 36 und stromaufwärts des nachgeschalteten Oxidationskatalysators 38 ein fünfter Temperaturwert des Abgases, ein zweiter Stickoxidwert sowie ein Wert erfasst, der über den Restgehalt an Ammoniak Auskunft gibt.

Anhand der über die Messstellen 42, 44, 46, 48 und 50 erfassten und der zentralen Steuereinheit 40 zur Verfügung gestellten Werte kann diese die Funktionsfähigkeit der erfindungsgemäßen Abgasreinigungsanlage überprüfen und deren Regelung bewirken.

So sind die NOₓ-Sensoren an den Messstellen 46 und 50 dafür vorgesehen, Eingangswerte für die Überwachung der Funktion des SCR-Katalysators 36, für eine Regelung der Harnstoffdosierung über die Dosiervorrichtung 34 und für eine Auslösung bzw. Regelung einer Regeneration des Partikelfilters 26 zu liefern.

Die Temperatursensoren an den Messstellen 42, 44, 46, 48 und 50 dienen dazu, die Überwachung der Funktion des vorgeschalteten Oxidationskatalysators 16 sowie des Partikelfilters 26 zu ermöglichen. Weiterhin dienen diese Temperatursensoren zur Regelung von Heizmaßnahmen für die Regeneration des Partikelfilters 26, wenn das den Partikelfilter 26 durchströmende Abgas eine hohe Temperatur haben muss, um dessen Regeneration zu bewirken. Darüber hinaus werden die Temperatursensoren dazu verwendet, Maßnahmen zur Erhöhung der Abgastemperatur zu regeln, die den Stickoxid-Umsatz verbessern sollen oder Versottungseffekte vermeiden sollen.

Der NH₃-Sensor an der Messstelle 50 ist dafür vorgesehen, eine Überwachung und Regelung der Harnstoffdosierung über die Dosiervorrichtung 34 und die Leitung 32 zu ermöglichen. Darüber hinaus dient der NH₃-Sensor an der Messstelle 50 zur Überwachung der Funktion des SCR-Katalysators 36.

Die Drucksensoren an den Messstellen 44 und 46 sind stromaufwärts bzw. stromabwärts des Partikelfilters 26 angeordnet und dienen zur Erfassung des Druckabfalls über den Partikelfilter 26. Die Eingangssignale dieser Drucksensoren werden von der zentralen Steuereinheit 40 zur Überwachung der Funktion des Partikelfilters sowie zur Regelung der Regeneration des Partikelfilters 26 verwendet.

Die Wasserstoffdosierung über die Dosiervorrichtung 18 und die Leitung 22, die unmittelbar vor dem vorgeschalteten Oxidationskatalysator 16 in den Abgasstrang mündet, ist dazu vorgesehen, die Anspringtemperatur der HC- und CO-Oxidation am vorgeschalteten Oxidationskatalysator abzusenken.

Eine Wasserstoffdosierung über die Leitung 24, die zwischen dem vorgeschalteten Oxidationskatalysator 16 und dem Partikelfilter 26 in den Abgasstrang mündet, ist zur Unterstützung der Regeneration des Partikelfilters 26 vorgesehen. Eine Wasserstoffdosierung über die Leitung 28, die zwischen dem Partikelfilter 26 und dem Hydrolysekatalysator 30 und somit stromaufwärts des SCR-Katalysators 36 in den Abgasstrang mündet, ist dazu vorgesehen, die Anspringtemperatur der NOₓ-Minderung durch den SCR-Katalysator 36 abzusenken.

Insgesamt kombiniert die Erfindung einzelne, für sich selbständig arbeitende Abgasnachbehandlungstechniken für die Reduzierung von Kohlenwasserstoffen HC, Kohlenmonoxiden CO, Stickoxiden NOₓ und Partikeln. Durch die Erfindung werden die einzelnen Abgasnachbehandlungstechniken gesamtheitlich aufeinander abgestimmt.

Die Darstellung der Fig. 2 zeigt eine zweite bevorzugte Ausführungsform der Erfindung, wobei lediglich auf die Unterschiede zur Ausführungsform der Fig. 1 hingewiesen werden soll. Motornah zum Dieselmotor 10 und im Abgasstrang unmittelbar auf diesen folgend ist ein Partikelfilter 52 mit Oxidationskatalysatorbeschichtung angeordnet. Dieser Partikelfilter 52 übernimmt somit die Funktion des vorgeschalteten Oxidationskatalysators 16 und des Partikelfilters 26 der Ausführungsform der Fig. 1.

Auf den Partikelfilter 52 folgt im Abgasstrang der SCR-Katalysator 36. Zwischen dem Partikelfilter 52 und dem SCR-Katalysator 36 kann optional der Hydrolysekatalysator 30 angeordnet sein. Es versteht sich dabei, dass dann, wenn der Hydrolysekatalysator 30 nicht stromaufwärts des SCR-Katalysators 36 angeordnet ist, zweckmäßigerweise Ammoniak als Reduktionsmittel über die Dosiervorrichtung 34 in den Abgasstrom eingebracht wird.

Stromabwärts des SCR-Katalysators 36 kann optional der nachgeschaltete Oxidationskatalysator 38 folgen.

Aufgrund der Kombination des vorgeschalteten Oxidationskatalysators 16 und des Partikelfilters 26 zu dem Partikelfilter 52 mit oxidierend wirkender Beschichtung entfällt gegenüber der Ausführungsform der Fig. 1 auch die Leitung 24 von der Dosiervorrichtung 18 für Wasserstoff zum Abgasstrang. Neben der Leitung 24 entfällt gegenüber der Fig. 1 auch die Messstelle 44. Im übrigen sind mit der Ausführungsform der Fig. 1 baugleiche Komponenten mit den gleichen Bezugsziffern wie in der Fig. 1 bezeichnet.

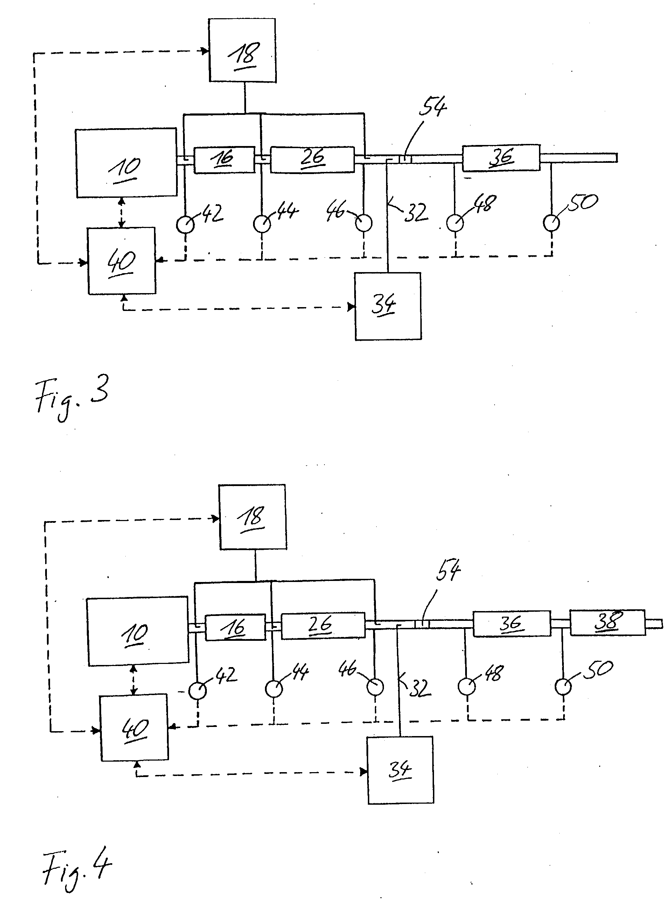

Eine dritte Ausführungsform der Erfindung ist schematisch in der Fig. 3 dargestellt. Gegenüber der Ausführungsform der Fig. 1 sind hier der Hydrolysekatalysator 30 sowie der nachgeschaltete Oxidationskatalysator 38 entfallen. Stromabwärts der Mündung der Leitung 32 in den Abgasstrang, die von der Dosiervorrichtung 34 für Reduktionsmittel ausgeht, ist eine Gasmischvorrichtung 54 angeordnet. Mittels der Gasmischvorrichtung 54 wird eine homogene Verteilung des über die Leitung 32 eingebrachten Reduktionsmittels im Abgas erreicht. Optional kann die Gasmischvorrichtung 34 mit einem Hydrolysekatalysator beschichtet sein, um auf diese Weise bei Verwendung von Harnstoff als Reduktionsmittel dessen Hydrolyse zu unterstützen. Darüber hinaus kann die Gasmischvorrichtung 54 mit einem SCR-Kata-lysator beschichtet sein, um eine SCR-Reaktion zu unterstützen.

Im übrigen entsprechen die Komponenten der Ausführungsform der Fig. 3 den Komponenten der in der Fig. 1 dargestellten Ausführungsform und sind mit den gleichen Bezugszeichen bezeichnet.

Eine vierte bevorzugte Ausführungsform der Erfindung ist in der Fig. 4 schematisch dargestellt. Gegenüber der in der Fig. 3 gezeigten Ausführungsform ist lediglich der nachgeschaltete Oxidationskatalysator 38 hinzugefügt worden. Wie im Zusammenhang mit der Fig. 1 erläutert wurde, dient der nachgeschaltete Oxidationskatalysator 38 dazu, Ammoniak im Abgasstrom zu oxidieren, so dass dieses nicht in die Umgebung austritt.

## Patentansprüche

1. Abgasreinigungsanlage für eine Brennkraftmaschine (10), die in Strömungsrichtung des Abgases gesehen einen Partikelfilter (26), Mittel (34) zum Bereitstellen eines Reduktionsmittels im Abgasstrom, einen Katalysator (36) zur Reduktion von im Abgas enthaltenem Stickoxid sowie einen nachgeschalteten Oxidationskatalysator (38) aufweist,
**dadurch gekennzeichnet, dass**
in Strömungsrichtung des Abgases gesehen vor dem Partikelfilter (26) ein vorgeschalteter Oxidationskatalysator (16) angeordnet ist.

2. Abgasreinigungsanlage für eine Brennkraftmaschine (10), die in Strömungsrichtung des Abgases gesehen einen Partikelfilter (26), Mittel (34) zum Bereitstellen eines Reduktionsmittels im Abgasstrom, einen Katalysator (36) zur Reduktion von im Abgas enthaltenem Stickoxid sowie einen nachgeschalteten Oxidationskatalysator (38) aufweist,
**dadurch gekennzeichnet, dass** der Partikelfilter (52) mit einer Oxidationskatalysatorbeschichtung versehen ist.

3. Abgasreinigungsanlage nach Anspruch 1 oder 2,
**dadurch gekennzeichnet, dass** Mittel (18) zum Einbringen von Wasserstoff oder Kraftstoff in den Abgasstrom stromaufwärts des Partikelfilters (26; 52) und/oder stromaufwärts des vorgeschalteten Oxidationskatalysators (16) und/oder des Katalysators (36) zur Reduktion von im Abgas enthaltenem Stickoxid vorgesehen sind.

4. Abgasreinigungsanlage nach einem der vorstehenden Ansprüche,
**dadurch gekennzeichnet, dass** die Mittel zum Bereitstellen eines Reduktionsmittels im Abgasstrom eine Vorrichtung (34) zum Einbringen von Harnstoff in den Abgasstrom sowie einen im Abgasstrom angeordneten Hydrolysekatalysator (30) aufweisen.

5. Abgasreinigungsanlage nach einem der vorstehenden Ansprüche,
**dadurch gekennzeichnet, dass** stromaufwärts des Katalysators (36) zur Reduktion von im Abgas enthaltenem Stickoxid eine Gasmischvorrichtung (54) im Abgasstrom vorgesehen ist.

6. Abgasreinigungsanlage nach Anspruch 5,
**dadurch gekennzeichnet, dass** die Gasmischvorrichtung (54) wenigstens teilweise mit einem als Hydrolysekatalysator wirkenden Material beschichtet ist.

7. Abgasreinigungsanlage nach Anspruch 5 oder 6,
**dadurch gekennzeichnet, dass** die Gasmischvorrichtung (54) wenigstens teilweise mit einem als Katalysator zur Reduktion von im Abgas enthaltenem Stickoxid wirkenden Material beschichtet ist.

8. Abgasreinigungsanlage nach einem der vorstehenden Ansprüche,
**dadurch gekennzeichnet, dass** wenigstens ein Temperatursensor, wenigstens ein Drucksensor im Bereich des Partikelfilters, wenigstens ein Stickoxid-Sensor sowie wenigstens ein Ammoniak-Sensor im Abgasstrom vorgesehen sind und dass eine zentrale Steuereinheit (40) zur Ansteuerung der Mittel (34) zum Bereitstellen eines Reduktionsmittel sowie der Mittel (18) zum Einbringen von Wasserstoff oder Kraftstoff in Abhängigkeit von Signalen der Sensoren vorgesehen ist.
